# EUROPEAN PATENT SPECIFICATION

(11) **EP 4 378 801 B1**
(45) Date of publication and mention of the grant of the patent: **07.10.2026**
(21) Application number: 22210576.9
(22) Date of filing: 30.11.2022
(51) Int. Cl.: B62D 25/00

(54) **DRAINING MEANS FOR COMPONENT OF A VEHICLE CARROSSERIE, COMPONENT OF A VEHICLE CARROSSERIE AND METHOD FOR MANUFACTURING A COMPONENT OF A VEHICLE CARROSSERIE**
ENTWÄSSERUNGSMITTEL FÜR EINEN BESTANDTEIL EINES FAHRZEUGWAGENS, BESTANDTEIL EINES FAHRZEUGWAGENS UND VERFAHREN ZUR HERSTELLUNG EINES BESTANDTEILS EINES FAHRZEUGWAGENS
MOYEN DE DRAINAGE POUR COMPOSANT D'UNE CARROSSERIE DE VÉHICULE, COMPOSANT D'UNE CARROSSERIE DE VÉHICULE ET PROCÉDÉ DE FABRICATION D'UN COMPOSANT D'UNE CARROSSERIE DE VÉHICULE

(43) Date of publication of application: 05.06.2024
(73) Proprietor: Volvo Car Corporation, 405 31 Göteborg (SE)
(72) Inventor: CARLHOLMER, Stefan, 40531 Göteborg (SE); KOSONEN, Kimmo, 40531 Göteborg (SE)
(74) Representative: Kransell & Wennborg KB

(56) References cited:
- EP-A2- 1 293 387
- AT-B- 403 684
- DE-A1- 102011 011 388
- DE-A1- 102014 018 399
- JP-A- 2009 208 015
- US-A1- 2011 285 171

## Description

### TECHNICAL FIELD

The present disclosure relates to a draining means for a component of a carrosserie of a vehicle, a component of a carrosserie for a vehicle, and a method for manufacturing a component of a carrosserie of a vehicle.

### BACKGROUND ART

In the manufacturing process of a carrosserie of a vehicle, draining means are necessary, e.g., for draining excess paint. Such draining means are usually formed as round holes, at least some of which need be closed afterwards to prevent corrosion, entry of dirt, etc. Conventionally, those holes are closed or sealed by applying a tape of the holes and/or by inserting a plug, which is usually done manually by an individual, such as a line worker.

AT 403 684 B discloses a method for introducing cavity protection into cavities in a car body and also a car body having cavities, holes being provided in the walls of the cavities and these holes being arranged on the bottom side of the cavities and also having connections for sealing stoppers, fuel-filling hoses, air-extraction hoses and connecting hoses, and holes passing between adjacent cavities being provided.

DE 10 2011 011388 A1 teaches a corrosion proof motor car hollow body. The body i.e. motor car door, has a slot-shaped opening arranged at a lower side of the hollow body, which is partially filled with a corrosion protection material i.e. corrosion protection wax. An edge of the opening is designed as a collar projecting into a cavity of the hollow body in a cylindrical or frusto-conical shape. Height of the collar corresponds to a predetermined level of the protection material. The opening includes a circular cross-section, and is designed as a drainage hole and/or an insertion opening for the protection material. An independent claim is also included for a method for manufacturing a corrosion proof motor car hollow body.

US 2011/285171 A1 relates to a sandwich panel. A sandwich panel for a vehicle is provided. The sandwich panel includes a first panel defining a plurality of apertures, and a second panel attached to the first panel. The second panel and the first panel define a cavity between the first panel and the second panel. Foam is disposed between the first panel and the second panel. The plurality of apertures of the first panel are operatively configured to receive a tool for pumping expandable foam in between the first panel and the second panel.

EP 1 293 387 A2 shows a vehicle body and method and means for filling a seam of a vehicle body. Joints between the individual parts of the bodywork are packed with a self-adhesive filler which bonds to the parts. Independent claims are made for: (a) a process for filling the joint in the bodywork in a fluid tight cover is placed over the joint, filler is injected into the chamber created and after filler hardening the cover is removed; and (b) process equipment which includes a joint cover whose breadth extends beyond the joint sides.

JP 2009 208 015 A describes a corrosion preventive treatment method of an automobile body.

DE 10 2014 018399 A1 shows a cast component for a vehicle body.

### SUMMARY

Hence, there may be a need to provide improved draining means, an improved component of a carrosserie of a vehicle, and/or an improved method for manufacturing a component of a carrosserie of a vehicle, which may facilitate the sealing of the draining means and particularly increasing a degree of automation of the manufacturing process.

The object of the present disclosure is at least partially solved or alleviated by the subject-matter of the appended independent claims, wherein further examples are incorporated in the dependent claims.

According to a first aspect, there is provided a draining means for a component of a carrosserie of a vehicle. The draining means comprises at least one slot, which is configured to be formed or formable in a surface of the component of the carrosserie of the vehicle and is configured to drain liquids, e.g., paint, corrosion protection material etc., and optionally air, during a manufacturing process, particularly of the component of the carrosserie. Further, the at least one slot is configured to be sealable or closable by a sprayable material, particularly by a sprayable sealing material.

The draining means may be defined as comprising at least one opening or hole allowing a liquid and/or air to drain from a surface and/or out of a cavity, and the like. The manufacturing process may comprise applying the liquid onto the surface via spraying, and/or via immersing the surface and/or the component into a bath of liquid, etc. The excessive liquid may be drained via the draining means during and/or after applying the liquid, e.g., after removing the surface and/or component from the liquid bath. The air may particularly be drained out of a cavity, while immersing the surface and/or component in the liquid bath to ensure that the liquid can be applied onto the surface inside the cavity.

The slot may also be referred to as a slotted hole, an elongated hole and/or an oblong hole. The sprayable material may have a viscosity sufficient to close an opening area of the at least one slot. In other words, the sprayable material may be sufficiently viscious that it can seal or close the opening area of the at least one slot. Sealing or closing the at least one slot by the sprayable material allows reducing or even eliminating the need of tape or plugs to seal or close the draining means, thereby improving ergonomic aspects for the line workers, without reducing the draining capabilities, since the at least one slot substantially has the same cross-sectional area as the conventional draining means, usually being formed as round holes.

Further, it allows easily sealing or closing the draining means positioned in hard-to-reach areas, such as hollow beam sections etc., which may not be sealable with tape and/or plugs. Closing such draining means allows reducing noise and/or prone to corrosion. In particular, by closing the draining means, a transmission loss of the component may be improved, e.g., by about 10 dB. Additionally, sealing or closing the draining means comprising the at least one slot allows increasing a level of automation of the manufacturing process, e.g., by applying the sprayable material via a robot being controlled by a control unit.

According to the disclosure, the at least one slot has a length being larger, in particular significantly larger, than a width thereof. According to an example, the length of the at least one slot may be at least two times larger than the width.

The form of the slot may have about the same cross-sectional area as the conventional round holes but may allow being closed by the sprayable material due to a small width. Thus, the at least one slot may facilitate a sealing or closing process of the draining means without reducing the draining capabilities. Further, the at least one slot may need less space than the conventional round holes, increasing a flexibility of designing, in particular forming, the component of the carrosserie of the vehicle.

According to an example, the at least one slot may be formed in the surface of the component by sawing, e.g., via a circular saw, particularly with regard to the component being at least partly made of aluminum or an aluminum alloy, or by lasercutting, particularly with regard to the component being at least party made of steel or an steel alloy, or by milling.

Manufacturing methods like sawing and/or lasercutting and/or milling etc., may allow reducing the impact or effect of the draining means on the surrounding material. Thus, the at least one slot being formed by sawing or by lasercutting or by milling may form smaller section having less effects on the surrounding material, e.g., on spotwelds, thereby increasing the flexibility of designing, in particular forming, the component of the carrosserie of the vehicle. The conventional round holes are usually formed by punching, which requires a predetermined distance to another material processing location, such as a spotweld, another draining means etc., since punching may result in material deformation within this predetermined distance. In other words, since the at least one slot is not formed by punching, a distance between the draining means and a spotweld may be reduced.

According to the disclosure, the width of the at least one slot is in a range from about 0.5 mm to about 6 mm. The width of the at least one slot may particularly be in a range from about 1 mm to about 5 mm, more particularly from about 2 mm to about 4 mm.

Those widths may be easily sealable or closable by the sprayable material.

According to an example, the draining means may further comprise various slots.

The various slots may be arranged as a group and/or may be arranged separately being spread on the surface of the component of the carrosserie of the vehicle. Since the slot may be formed by sawing or lasercutting or milling, a distance between two adjacent slots, e.g., of several slots being arranged as a group, may be reduced, allowing a compact arrangement of grouped slots.

According to a second aspect, there is provided a component of a carrosserie for a vehicle. The component comprises a main body being formed of a metal, e.g., aluminum or steel or an alloy, and a draining means according to the first aspect, which is formed on a surface of the main body.

The draining means being formed on the surface of the main body are easily sealable or closable by a sprayable material, particularly a sprayable sealing material, facilitating the sealing process of the surface of the main body and/or reducing prone to corrosion of the component of the carrosserie, without reducing the draining capabilities of the draining means. Additionally, sealing or closing the draining means comprising the at least one slot allows increasing a level of automation of the manufacturing process, e.g., by applying the sprayable material via a robot being controlled by a control unit.

According to an example, the main body may be formed by casting and/or extruding and/or may comprise at least one of a bending portion, a welding portion, connecting portion (welding connection, riveting connection, screwed connection, glued connection, brazed connection etc.), and a beading/corrugation.

As described above with regard to the first aspect, the at least one slot of the draining means may require less space than the conventional round holes and/or may provide more flexibility in positioning the draining means on the surface of the main body of the component. Therefore, the flexibility in designing the component of the carrosserie of the vehicle may be increased.

According to an example, the main body may comprise at least a hollow profile section, in particular a closed hollow profile section.

Hollow profiles may be used for increasing strength and/or stability of at least a part of the component of the carrosserie of the vehicle positioned. However, at least part of the hollow profile, particularly a cavity, may correspond to hard-to-reach areas regarding sealing or closing the draining means being arranged on the hollow profile. In particular, the draining means being arranged in the hard-to-reach areas may not be sealable or closable conventionally with tape or plugs. However, using a sprayable material for sealing or closing the draining means may allow sealing or closing even those draining means being arranged in the hard-to-reach areas, resulting in reducing noise and/or prone to corrosion.

According to an example, the component may further comprise a sprayable material, wherein the sprayable material may be a sprayable sealing material, and may be configured to close or seal the draining means.

Using a sprayable sealing material for sealing or closing the at least one slot may allow increasing a level of automation of the manufacturing process, e.g., by applying the sprayable material via a robot being controlled by a control unit. Furthermore, the sprayable sealing material may allow reducing costs for sealing or closing the draining means, particularly compared to the conventionally tapes and/or plugs. In particular, the use of the sealing material may reduce the costs for sealing the draining means to about 1/10 of the costs, when using the conventional tapes and/or plugs.

According to an example, the sprayable material may be further configured as a noise reduction material.

The sprayable material being further configured as a noise reduction material may also be referred to as damping material. In other words, a sprayable damping material configured to reduce noise of the component of the carrosserie of the vehicle may additionally function as a sealing material in case draining means may be arranged in the area of the surface of the component being configured to be damped.

According to an example, the sprayable material may be configured to be applied to a surface of the main body.

In this case, the sprayable material may be used as the damping material. Furthermore, the damping material may be used as the sealing material. By applying the sprayable material and/or damping material on the surface of the main body, both reduction of noise and sealing or closing of the draining means being arranged on that surface, may be achieved in one processing step.

According to an example, the draining means may comprise various slots, and at least part of the various slots may be arranged in a pattern or as a group.

Since the slots may be formed by sawing or lasercutting or milling, a distance between two adjacent slots, e.g., of several slots being arranged as a group, may be reduced, allowing a compact arrangement of grouped slots. Additionally, or alternatively, the slots may be arranged separately being spread on the surface of the component of the carrosserie of the vehicle.

According to a third aspect, there is provided a method for manufacturing a component of a carrosserie of a vehicle according to the second aspect, the method comprising:
forming a main body of the component of a metal, e.g., by casting and/or extruding and/or providing the main body with at least one of a bending portion, a welding portion, connecting portion, e.g., a welding connection, a riveting connection, a screwed connection, a glued connection, a brazed connection etc., and a beading/corrugation,
forming the draining means into the main body by cutting the at least one slot in a surface of the component of the carrosserie of the vehicle either via a circular saw and/or via a laser, and/or by milling;
treating the main body of the component with at least one liquid, e.g., via immersing the component into a paint, cleaning liquid, de-ionized water etc.,
draining the excessive liquid via the draining means from the main body of the component, and
spraying, via a nozzle, a layer of a first predetermined thickness of a sprayable material at least onto the draining means, thereby sealing and/or closing the draining means at least partly.

Such manufacturing method may increase the flexibility in designing the component of the carrosserie of the vehicle. In more detail, the draining means being formed on the surface of the main body may be easily sealable or closable by a sprayable sealing material, facilitating the sealing process of the surface of the main body and/or reducing prone to corrosion of the component of the carrosserie, without reducing the draining capabilities of the draining means. Additionally, the method may allow increasing a level of automation of the manufacturing process, e.g., by applying the sprayable material via a robot being controlled by a control unit.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the method may further comprise spraying, via the nozzle, a layer of a second predetermined thickness of the sealing material onto a, particularly plain, surface of the main body, thereby additionally damping the surface of the main body.

Thus, the sealing material may additionally be used as a damping material. In other words, one can say that the sprayable material may be either a damping material or a sealing material. A primary function of the damping material is damping the surface but may additionally be used to seal at least one slot of the draining means, particularly in case the at least one slot is formed in the surface to be damped by the damping material, since the damping material may have sealing characteristics being similar to those of the sealing material, which is a material, the primary function of which is sealing the draining means.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the embodiments described hereinafter.

### BRIEF DESCRIPTION OF DRAWINGS

Exemplary examples of the disclosure will be described in the following with reference to the following drawings.
- Fig. 1A: shows schematically and a perspective view of an exemplary component of a carrosserie of a vehicle comprising conventional draining means.
- Fig. 1B: shows schematically and exemplarily another perspective view of the exemplary component of the carrosserie of the vehicle of Fig. 1A.
- Fig 2A: shows schematically and exemplarily a perspective view of an exemplary component of a carrosserie of a vehicle comprising draining means according to the present disclosure.
- Fig. 2B: shows schematically and exemplarily another perspective view of the exemplary component according to the present disclosure, of the carrosserie of the vehicle of Fig. 2A.
- Fig. 3A: shows schematically an exemplary component according to the present disclosure in a perspective view.
- Fig. 3B: shows schematically the exemplary component of Fig. 3A additionally comprising a sealing material according to the present disclosure.
- Fig. 4: shows schematically and exemplarily a partial view of a component according to the present disclosure.
- Fig. 5: shows a schematic flow diagram of an exemplary method for manufacturing the component according to the present disclosure.

The figures are merely schematic representations and serve only to illustrate examples of the disclosure. Identical or equivalent elements are in principle provided with the same reference signs.

### DESCRIPTION OF EMBODIMENTS

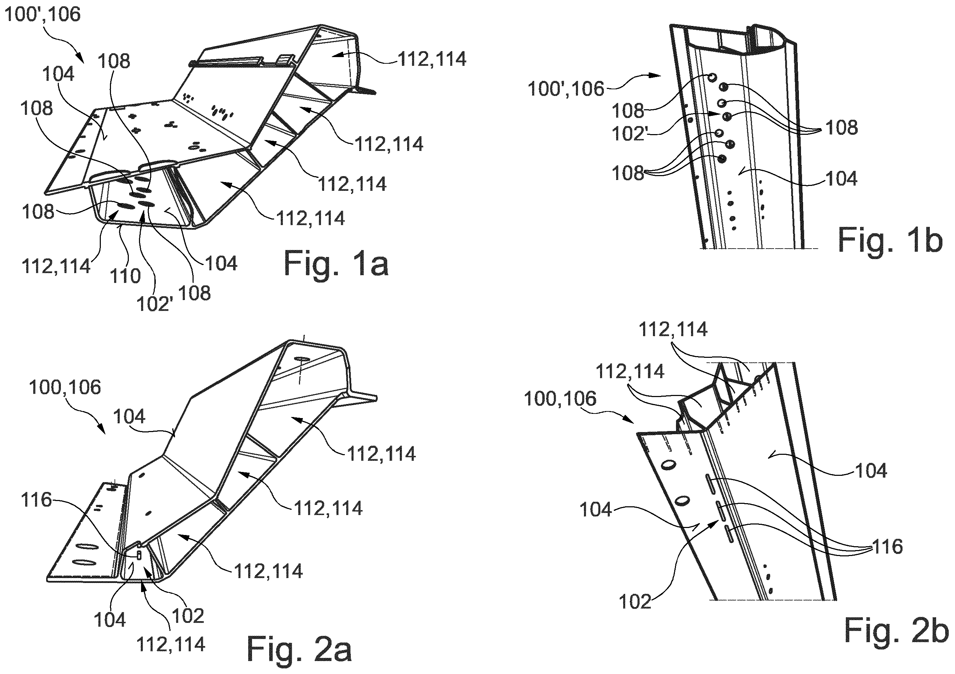

Figures 1A and 1B show schematically an exemplary component 100' of a carrosserie of a vehicle (not shown) comprising conventional draining means 102' in different perspective views. Figures 2A and 2B show schematically an exemplary component 100 of a carrosserie of a vehicle (not shown) comprising draining means 102 according to the present disclosure. Draining means 102, 102' are used to drain liquids and/or air from surfaces 104 and/or cavities of the component 100, 100' during the manufacturing process of the component 100, 100' and/or the carrosserie of the vehicle. The liquids may comprise paint, degrease liquid, water, de-ionized water, activation and/or passivation liquids etc. The component 100, 100' may comprise a main body 106, and the draining means 102, 102' may be formed on the surfaces 104 of the main body 106.

The component 100' as exemplarily shown in Figures 1A and 1B is a casted part comprising several hollow profile sections 112, wherein the draining means 102' are arranged in one of the several hollow profile sections 112. The draining means 102' as exemplarily shown in Figures 1A and 1B are formed as substantially round holes 108, which are usually made by punching. The conventional round holes 108 may have a diameter from around 6 mm and up to around 20 mm, and therefore require the application of a tape (not shown) or the insertion of a plug (not shown) to be closed, which need to be applied or inserted manually, e.g., by a line worker. Additionally, the draining means 102' has to be closed from inside the hollow profile section 112, so that the closed draining means 102' are not visible from an outer surface 110 of the component 100'.

A cavity 114 being formed by the hollow profile section 112 is hard to reach and may be designed larger only to enable a manual application of a tape and/or a manual insertion of a plug. Therefore, the cavity 114 of the hollow profile section 112 may also be referred to as hard-to-reach area. Alternatively, draining means 102', which are arranged in hard-to-reach areas not being manually accessible, may be left open, which increases the risk of corrosion, because dirt may enter into the cavity 114 through the draining means 102' being left open.

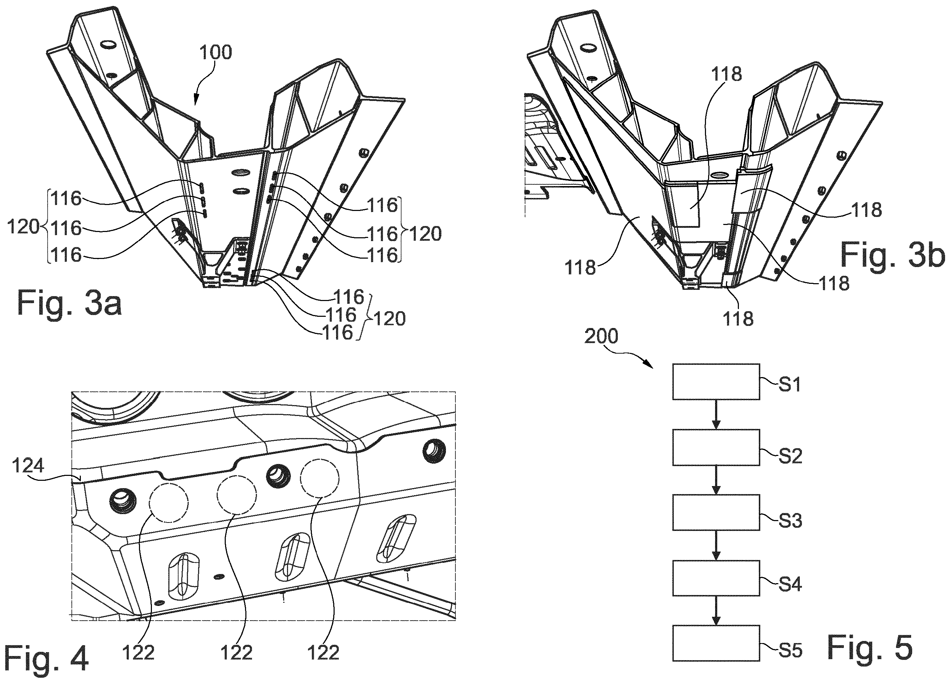

The component 100 as exemplarily shown in Figures 2A and 2B is also a casted part comprising several hollow profile sections 112, wherein the draining means 102 are arranged in one of the several hollow profile sections 112. The draining means 102 as exemplarily shown in Figures 2A and 2B are formed as slots116, which may be made by sawing and/or lasercutting and/or milling. The manufacture method may depend on the type of metal the component 100 is formed of, e.g., aluminum, steel, aluminum alloy, steel alloy etc. The slots 116 have a length L larger than a width W, wherein the width W may be up to about 6 mm, and the length L may be up to about 100 mm. For being able to seal or close the draining means 102 by a sprayable material 118 (see Figure 3B), the width W of the slots 116 is crucial, whereas the length L of the slots is negligible at least with regard to sealing the slots 116.

In other words, the width W of the slots 116 is restrictive for sealing or closing the slots via a sprayable sealing material, whereas the length L of the slots 116 may substantially be chosen as desired. In particular, the width W and the length L may be chosen such that a cross-sectional area of the slot substantially corresponds to a cross-sectional area of a conventional round hole 104.

As described above, with regard to Figures 1A and 1B, the cavity 114 being formed by the hollow profile section 112 is hard to reach. However, in contrast to the tape and/or plugs, the sprayable sealing material 118 may be easily applicable to the slots 116 from inside the cavity, e.g., via an extension tube, a tiny robotic arm etc., and therefore, the cavity 114 can be designed small and/or compact.

In other words, the cavity 114 can be designed according to the required strength, stability and the like, of the component. Further, in case some slots 116 may be left open, the risk of corrosion, for example due to the entry of dirt, is reduced compared to the conventional round holes 108, because the relatively narrow width of the slot 116 may prevent the entry of a larger amount of dirt. In other words, it is less likely that dirt may enter through an opening having a long but narrow cross-sectional area than through an opening having a substantially round cross-sectional area, wherein both cross-sectional areas are approximately the same size.

Figures 3A and 3B show schematically the same exemplary component 100, wherein Figure 3A shows the component 100 before a sprayable sealing material 118 is applied, and Figure 3B shows the component 100 after the application of the sprayable sealing material 118.

As shown in Figure 3A, the exemplary component 100 comprises nine slots 116 being arrange in three groups 120 of each three slots 116. In Figure 3B it is shown that the sprayable sealing material 118 is applied in a first thickness (shown as areas having a small rhomb pattern) to seal the slots 116. Further, the sprayable material 118 is applied in a second thickness (shown as areas having a large rhomb pattern), wherein the second thickness is smaller than the fist thickness. The sealing material 118 of the second thickness is applied to substantially plane surface section without any openings. In such areas, the sealing material 118 is used for damping to reduce noise. Therefore, the sealing material 118 may also be referred to as damping material. In other words, on can say that the sealing material 118 may be a sprayable material whose main purpose is the sealing or closing of the draining means 102, or the sealing material 118 may be a sprayable material whose main purpose is the damping of surfaces 104, 110, which additionally is able to seal the slots 116 being formed in the surfaces 104, 110 to be damped. The sealing material 118 may be a thermoplastic, e.g., waterborne acrylates, such as NUXODOL 3100 and EFDAMP AX-528 etc., and/or polyvinyl chloride (PVC), such as BETAGUARD INS 35 S, BETAGUARD DC 431-V, BETAGUARD EP 2009, BETAFILL 10101 etc.

Figure 4 shows schematically and exemplarily a partial view of a component 100 according to the present disclosure. In Figure 4, three dashed circles 122 mark welding spots, e.g., for spotweld, which are arranged close to the slot 116. Further, the slot 116 is arranged close to or at a transitional edge 124 of the component 100. Such compact arrangement of welding spots and draining means 102 allows reducing a size of the surface 104, on which the welding spots are arranged compared to a required size of the surface with draining means 102' being formed as round holes 108, since the punching method for forming the round holes requires a predetermined distance to edges of the main body 106 of the component 100, 100', such as the transitional edge 124, as well as to welding spots 122, which increases the required size of the respective surface.

Figure 5 shows a schematic flow diagram of an exemplary method 200 for manufacturing the component 100 according to the present disclosure.

In a step S1 the main body 106 of the component 100 is formed of a metal, particularly aluminum or steel. For example, the main body 106 may be formed by casting, extruding etc., and/or comprising at least one of a bending portion, a welding portion, connecting portion, such as a welding connection, a riveting connection, a screwed connection, a glued connection, a brazed connection etc., and a beading/corrugation. In a step S2 the draining means 102 are getting formed into the main body 106 by cutting the at least one slot 116 in a surface 104, 110 of the component 100, either via a circular saw or via a laser. Alternatively, the slot 116 may be formed by milling. In a step S3, the main body 106 is treated with at least one liquid, such as paint etc., is applied to the main body 106 of the component 106, e.g., via immersing the component 100 at least partly in the liquid. In a step S3, the excessive liquid is drained via the draining means 102 being formed as at least one slot 116 in at least one surface 104, 110 of the main body 106, from the main body 106 of the component 100. In a step S5, a layer of a first predetermined thickness of the sealing material 118 is spayed at least onto the draining means 102 (being formed as at least on slot 116), thereby sealing or closing the draining means 102.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100, 100': component
- 102, 102': draining means
- 104: surface
- 106: main body
- 108: round holes
- 110: outer surface
- 112: hollow profile section
- 114: cavity
- 116: slot
- 118: sealing material
- 120: group
- 122: welding spots
- 124: transitional edge

- 200: method

## Claims

1. A draining means (102) for a component (100) of a carrosserie of a vehicle, comprising:
at least one slot (116) being configured to be formed in a surface (104) of the component (100) of the carrosserie of the vehicle, and configured to drain liquids during a manufacturing process,
a sprayable material (118), the sprayable material being a sprayable sealing material (118),
the at least one slot (116) being sealed by the sprayable material (118),
the at least one slot (116) having a length (L) being larger than a width (W) thereof, and
the width (W) of the at least one slot (116) being in a range from about 0.5 mm to about 6 mm.

2. The draining means (102) according to claim 1, the length (L) of the at least one slot (116) being at least two times larger than the width (W).

3. The draining means (102) according to claim 1 or 2, the at least one slot (116) being formed by sawing or by lasercutting or by milling.

4. The draining means (102) according to any of claims 1 to 3, further comprising various slots (116).

5. A component (100) of a carrosserie for a vehicle, comprising:
a main body (106) being formed of a metal, and
a draining means (102) according to any of claims 1 to 4, being formed on the main body (106).

6. The component (100) according to claim 5, the main body (106) being formed by casting, extruding etc., and/or comprising at least one of a bending portion, a welding portion, connecting portion (124), and a beading/corrugation.

7. The component (100) according to claim 5 or 6, the main body (106) comprising at least a hollow profile section (112).

8. The component (100) according to any of claims 5 to 7, the sprayable material being configured to seal the draining means (102).

9. The component (100) according to claim 8, the sprayable material (118) further being configured as a noise reduction material.

10. The component (100) according to claim 8 or 9, the sealing material (118) being configured to be applied to a surface (104, 110) of the main body (106).

11. The component (100) according to any of claims 5 to 10, the draining means (102) comprising several slots (116), and at least part of the several slots (116) being arranged in a group (120).

12. A method (200) for manufacturing a component (100) of a carrosserie of a vehicle according to any of claims 5 to 11, the method comprising:
forming the main body (106) of the component (100) of a metal;
forming the draining means (102) into the main body (106) by cutting the at least one slot (116) in a surface (104) of the main body (106) either via a circular saw or via a laser, or by milling, the at least one slot (116) having a length (L) being larger than a width (W) thereof, the width (W) of the at least one slot (116) being in a range from about 0.5 mm to about 6 mm;
treating the main body (106) of the component (100) with at least one liquid,
draining the excessive liquid via the draining means (102) from the main body (106) of the component (100), and
spraying, via a nozzle, a layer of a first predetermined thickness of a sealing material (118) at least onto the draining means (102), thereby sealing the draining means (102).

13. The method (200) according to claim 12, further comprising:
spraying, via the nozzle, a layer of a second predetermined thickness of the sealing material (118) onto a surface (104, 110) of the main body (106), thereby damping the surface (104, 110) of the main body (106).

## Patentansprüche

1. Ablaufeinrichtung (102) für eine Komponente (100) einer Karosserie eines Fahrzeugs, umfassend:
wenigstens einen Schlitz (116), dafür gestaltet, in einer Oberfläche (104) der Komponente (100) der Karosserie des Fahrzeugs gebildet zu werden, und dafür gestaltet, während eines Herstellungsvorgangs Flüssigkeiten abzulassen,
ein sprühbares Material (118), wobei das sprühbare Material ein sprühbares Dichtungsmaterial (118) ist,
wobei der wenigstens eine Schlitz (116) durch das sprühbare Material (118) abgedichtet ist,
wobei der wenigstens eine Schlitz (116) eine Länge (L) aufweist, die größer als eine Breite (W) davon ist, und wobei die Breite (W) des wenigstens einen Schlitzes (116) in einem Bereich von etwa 0,5 mm bis etwa 6 mm liegt.

2. Ablaufeinrichtung (102) nach Anspruch 1, wobei die Länge (L) des wenigstens einen Schlitzes (116) wenigstens zweimal größer als die Breite (W) ist.

3. Ablaufeinrichtung (102) nach Anspruch 1 oder 2, wobei der wenigstens eine Schlitz (116) durch Sägen oder durch Laserschneiden oder durch Fräsen gebildet ist.

4. Ablaufeinrichtung (102) nach einem der Ansprüche 1 bis 3, ferner umfassend verschiedene Schlitze (116).

5. Komponente (100) einer Karosserie für ein Fahrzeug, umfassend:
einen Hauptkörper (106), der aus einem Metall besteht, und
eine Ablaufeinrichtung (102) nach einem der Ansprüche 1 bis 4, die an dem Hauptkörper (106) gebildet ist.

6. Komponente (100) nach Anspruch 5, wobei der Hauptkörper (106) durch Gießen, Extrudieren usw. gebildet ist und/oder wenigstens eines von einem Biegeabschnitt, einem Schweißabschnitt, einem Verbindungsabschnitt (124) und einer Sicke/Riffelung umfasst.

7. Komponente (100) nach Anspruch 5 oder 6, wobei der Hauptkörper (106) wenigstens einen Hohlprofilabschnitt (112) umfasst.

8. Komponente (100) nach einem der Ansprüche 5 bis 7, wobei das sprühbare Material dafür gestaltet ist, die Ablaufeinrichtung (102) abzudichten.

9. Komponente (100) nach Anspruch 8, wobei das sprühbare Material (118) ferner als ein Schalldämmmaterial gestaltet ist.

10. Komponente (100) nach Anspruch 8 oder 9, wobei das Dichtungsmaterial (118) dafür gestaltet ist, auf eine Oberfläche (104, 110) des Hauptkörpers (106) aufgebracht zu werden.

11. Komponente (100) nach einem der Ansprüche 5 bis 10, wobei die Ablaufeinrichtung (102) mehrere Schlitze (116) umfasst und wenigstens ein Teil der mehreren Schlitze (116) in einer Gruppe (120) angeordnet ist.

12. Verfahren (200) zur Herstellung einer Komponente (100) einer Karosserie eines Fahrzeugs nach einem der Ansprüche 5 bis 11, wobei das Verfahren umfasst:
Bilden des Hauptkörpers (106) der Komponente (100) aus einem Metall;
Bilden der Ablaufeinrichtung (102) in den Hauptkörper (106) durch Schneiden des wenigstens einen Schlitzes (116) in einer Oberfläche (104) des Hauptkörpers (106) entweder durch eine Kreissäge oder durch einen Laser oder durch Fräsen, wobei der wenigstens eine Schlitz (116) eine Länge (L) aufweist, die größer als eine Breite (W) davon ist, wobei die Breite (W) des wenigstens einen Schlitzes (116) in einem Bereich von etwa 0,5 mm bis etwa 6 mm liegt;
Behandeln des Hauptkörpers (106) der Komponente (100) mit wenigstens einer Flüssigkeit,
Ablassen der überschüssigen Flüssigkeit über die Ablaufeinrichtung (102) aus dem Hauptkörper (106) der Komponente (100), und
Sprühen einer Schicht mit einer ersten vorgegebenen Dicke eines Dichtungsmaterials (118) über eine Düse wenigstens auf die Ablaufeinrichtung (102), um die Ablaufeinrichtung (102) abzudichten.

13. Verfahren (200) nach Anspruch 12, ferner umfassend: Sprühen einer Schicht mit einer zweiten vorgegebenen Dicke des Dichtungsmaterials (118) über die Düse auf eine Oberfläche (104, 110) des Hauptkörpers (106), um die Oberfläche (104, 110) des Hauptkörpers (106) zu dämpfen.

## Revendications

1. Moyen de drainage (102) pour un composant (100) d'une carrosserie d'un véhicule, comprenant :
au moins une fente (116) étant configurée pour être formée dans une surface (104) du composant (100) de la carrosserie du véhicule, et configurée pour drainer des liquides pendant un processus de fabrication,
un matériau pulvérisable (118), le matériau pulvérisable étant un matériau scellant pulvérisable (118),
l'au moins une fente (116) étant scellée par le matériau pulvérisable (118),
l'au moins une fente (116) ayant une longueur (L) étant plus grande qu'une largeur (W) de celle-ci, et
la largeur (W) de l'au moins une fente (116) étant comprise dans une plage allant d'environ 0,5 mm à environ 6 mm.

2. Moyen de drainage (102) selon la revendication 1, la longueur (L) de l'au moins une fente (116) étant au moins deux fois plus grande que la largeur (W).

3. Moyen de drainage (102) selon la revendication 1 ou la revendication 2, l'au moins une fente (116) étant formée par sciage ou par découpe au laser ou par fraisage.

4. Moyen de drainage (102) selon l'une quelconque des revendications 1 à 3, comprenant en outre diverses fentes (116).

5. Composant (100) d'une carrosserie pour un véhicule, comprenant :
un corps principal (106) étant formé d'un métal, et
un moyen de drainage (102) selon l'une quelconque des revendications 1 à 4, étant formé sur le corps principal (106).

6. Composant (100) selon la revendication 5, le corps principal (106) étant formé par coulée, extrusion, etc., et/ou comprenant au moins un élément parmi une portion de cintrage, une portion de soudage, une portion de connexion (124), et un bourrelet/une ondulation.

7. Composant (100) selon la revendication 5 ou la revendication 6, le corps principal (106) comprenant au moins une section de profilé creux (112).

8. Composant (100) selon l'une quelconque des revendications 5 à 7, le matériau pulvérisable étant configuré pour sceller le moyen de drainage (102).

9. Composant (100) selon la revendication 8, le matériau pulvérisable (118) étant en outre configuré comme un matériau de réduction du bruit.

10. Composant (100) selon la revendication 8 ou la revendication 9, le matériau scellant (118) étant configuré pour être appliqué sur une surface (104, 110) du corps principal (106).

11. Composant (100) selon l'une quelconque des revendications 5 à 10, le moyen de drainage (102) comprenant plusieurs fentes (116), et au moins une partie des plusieurs fentes (116) étant agencée en un groupe (120).

12. Procédé (200) de fabrication d'un composant (100) d'une carrosserie d'un véhicule selon l'une quelconque des revendications 5 à 11, le procédé comprenant :
la formation du corps principal (106) du composant (100) d'un métal ;
la formation du moyen de drainage (102) dans le corps principal (106) par découpe de l'au moins une fente (116) dans une surface (104) du corps principal (106) soit via une scie circulaire, soit via un laser, soit par fraisage, l'au moins une fente (116) ayant une longueur (L) étant plus grande qu'une largeur (W), la largeur (W) de l'au moins une fente (116) étant comprise dans une plage allant d'environ 0,5 mm à environ 6 mm ;
le traitement du corps principal (106) du composant (100) avec au moins un liquide,
le drainage du liquide en trop via le moyen drainage (102) du corps principal (106) du composant (100), et la pulvérisation, via une buse, d'une couche d'une première épaisseur prédéterminée d'un matériau scellant (118) au moins sur le moyen de drainage (102), scellant ainsi le moyen de drainage (102).

13. Procédé (200) selon la revendication 12, comprenant en outre :
la pulvérisation, via la buse, d'une couche d'une seconde épaisseur prédéterminée du matériau scellant (118) sur une surface (104, 110) du corps principal (106), amortissant ainsi la surface (104, 110) du corps principal (106).
